# EUROPEAN PATENT APPLICATION

(11) **EP 4 485 615 A2**
(43) Date of publication of application: **01.01.2025**
(21) Application number: 24184704.5
(22) Date of filing: 26.06.2024
(51) Int. Cl.: H01M 10/42, G01N 3/08, H01M 10/48

(54) **BATTERY TESTING SYSTEM AND APPARATUS WITH DYNAMIC FORCE APPLICATION**

(30) Priority: 26.06.2023 US 202318340936
(71) Applicant: Accenture Global Solutions Limited, Dublin 4 (IE)
(72) Inventor: Cordes, Hagen, 38102 Braunschweig (DE)
(74) Representative: Müller-Boré & Partner Patentanwälte PartG mbB

(57) **Abstract**

A testing apparatus for testing a battery's responses to charge and discharge cycles includes components that enable greater control over the compressive force applied to the battery being tested than typical testing apparatuses. A force applicator of the testing apparatus is able to effect an adjustable, non-linear force (e.g., according to a parabolic curve) on a battery undergoing testing, which typical techniques using mechanical springs are unable to do. A controller may adjust a force that the force applicator applies, according to a test procedure, based on information captured by at least one sensor. The testing apparatus may include sensors for measuring a thickness of the battery, and thereby an amplitude of battery swelling, over time.

## Description

### BACKGROUND

A battery test bench is a device used to test the performance and capacity of batteries. A battery test bench typically includes a computer-controlled testing system that can simulate real-world conditions to measure a battery's behavior and characteristics. Battery test benches are commonly used in the manufacturing of batteries, as well as in research and development to test the performance of new battery technologies. They can also be used by service technicians to diagnose battery issues and provide maintenance recommendations.

To use a battery test bench, the battery is typically connected to the bench and subjected to a series of tests that can include subjecting the battery to discharge and charge cycles, impedance measurements, and capacity tests. As part of these tests, a battery test bench may be used to apply force to the battery and the relevant responses of the battery during different charge and discharge processes is measured. Typically, the force is applied to the battery via mechanical springs, such as coil springs, of the battery test bench. Mechanical springs, however, can only apply force in a linear manner and the force the mechanical springs apply always increases as the mechanical springs are compressed. As such, there is no opportunity for typical battery test benches to apply force to the battery in non-linear manners, such as according to a parabolic curve, which is typical for materials that surround batteries. A user's control over testing batteries with a typical battery test bench is therefore limited.

### SUMMARY

The present disclosure provides new and innovative techniques for testing a battery's responses to charge and discharge cycles with greater control than typical techniques. For instance, the present techniques involve applying a force to a battery undergoing testing with a force applicator able to effect an adjustable, non-linear force (e.g., according to a parabolic curve), which typical techniques using mechanical springs are unable to do. Applying an adjustable, non-linear force to the battery enables the provided testing apparatus, according to some test procedures, to apply a constant force to the battery throughout a test procedure. Maintaining a constant force on the battery throughout the test procedure can be beneficial for laboratory testing of other variable features of the battery. The provided testing apparatus, by applying an adjustable, non-linear force to the battery, may also enable simulating forces applied to the battery by materials that may surround the battery, whether the material is a known material or an unknown material. It is noted that while a test apparatus according to the present disclosure is configured to apply an adjustable, non-linear force, the force applicator can also apply a linear force if desired. Therefore, the testing apparatus enables finer control over the compressive force applied to a battery being tested as compared to typical techniques using mechanical springs that are only able to apply linear force that increases as the mechanical springs are compressed and decreases as the mechanical springs are released.

In an example, an apparatus for testing a battery includes a first member, a second member, a force applicator, and a controller. The second member is able to translate relative to the first member. The force applicator is structured to effect a translational force on the second member such that, when a battery is disposed between the first member and the second member, a compressive force is applied to the battery. The controller is configured to control a pressure within the force applicator according to a test procedure, and generate an output of the test procedure. The translational force applied to the second member is based on the pressure within the force applicator. The output includes information associated with an impact of the compressive force on the battery.

In an example, a system includes a testing apparatus and a controller. The testing apparatus includes a first member, a second member, a force applicator, and a controller. The second member is able to translate relative to the first member. The force applicator is structured to effect a translational force on the second member such that, when a battery is disposed between the first member and the second member, a compressive force is applied to the battery. The controller is configured to control a pressure within the force applicator according to a test procedure, and generate an output of the test procedure. The translational force is based on the pressure within the force applicator. The output includes information associated with an impact of the compressive force on the battery.

In an example, a method includes receiving, during a test procedure associated with a battery, a first signal indicative of a first pressure within a force applicator of a testing apparatus. The force applicator is structured to effect a compressive force on the battery based on the first pressure. The method further includes determining a control signal configured to adjust the compressive force based on the first signal and at least one parameter of the test procedure. The compressive force on the battery may then be adjusted via the control signal. The method further includes determining an output of the test procedure. The output includes information associated with an impact of the compressive force on the battery.

Additional features and advantages of the disclosed method and apparatus are described in, and will be apparent from, the following Detailed Description and the Figures. The features and advantages described herein are not all-inclusive and, in particular, many additional features and advantages will be apparent to one of ordinary skill in the art in view of the figures and description. Moreover, it should be noted that the language used in the specification has been principally selected for readability and instructional purposes, and not to limit the scope of the inventive subject matter.

### BRIEF DESCRIPTION OF THE DRAWINGS

FIG. 1 is a block diagram of a system for testing a battery, according to an aspect of the present disclosure.
FIG. 2 illustrates a perspective view of an embodiment of a testing apparatus, according to an aspect of the present disclosure.
FIG. 3 illustrates a perspective view of another embodiment of a testing apparatus, according to an aspect of the present disclosure.
FIG. 4 is a flow chart of a method of testing a battery, according to an aspect of the present disclosure.
FIG. 5 illustrates an example output of a test procedure, according to an aspect of the present disclosure.
FIG. 6 illustrates a block diagram of a computing and networking environment, according to an aspect of the present disclosure.

### DETAILED DESCRIPTION

The present disclosure provides new and innovative techniques for testing a battery's responses to charge and discharge cycles with greater control than typical techniques. For instance, the present techniques involve applying a force to a battery undergoing testing with a force applicator able to effect an adjustable, non-linear force (e.g., according to a parabolic curve), which typical techniques using mechanical springs are unable to do.

By applying an adjustable, non-linear force to the battery, the provided testing apparatus enables applying a constant force to the battery throughout a test procedure. For example, as a battery swells, the force applied to the battery increases. The provided testing apparatus enables decreasing the force applied to the battery in response to the swelling in order to keep the force applied to the battery constant. Similarly, as a battery relaxes, the force applied to the battery decreases, and so the provided testing apparatus enables increasing the force applied to the battery in response to the battery relaxing in order to keep the force applied to the battery constant. Maintaining a constant force on the battery throughout the test procedure can be beneficial for laboratory testing of other variable features of the battery.

The provided testing apparatus, by applying an adjustable, non-linear force to the battery, may also enable simulating forces applied to the battery by materials that may surround the battery, whether the material is a known material or an unknown material. For instance, the testing apparatus's force applicator may be programmed or controlled to effect a force on the battery according to a known response (e.g., force curve) of a known material. In another instance, the testing apparatus's force applicator may be programmed or controlled to effect a non-linear force on the battery according to a desired response (e.g., force curve) of an unknown material. For example, a user might not have possession of a force curve of the unknown material. A material may be determined that exhibits the desired response, or if one does not exist, a material may be created if possible. The force applicator of the testing apparatus may also apply a linear force according to some test procedures.

A controller may adjust a force that the force applicator applies, according to the test procedure, based on information indicative of measurements captured by at least one sensor. For example, a load cell can detect a force that the force applicator applies to the load cell, a pressure within the force applicator required for the force applicator to apply a different force can be determined, and the pressure within the force applicator can be increased or decreased until one or more pressure sensors detect that the pressure within the force applicator is equal to the determined pressure. The testing apparatus may include displacement sensors for measuring a thickness of the battery, and thereby an amplitude of battery swelling, over time. Monitoring the amplitude of battery swelling over time can aid in mitigating the effects of irreversible swelling of the battery.

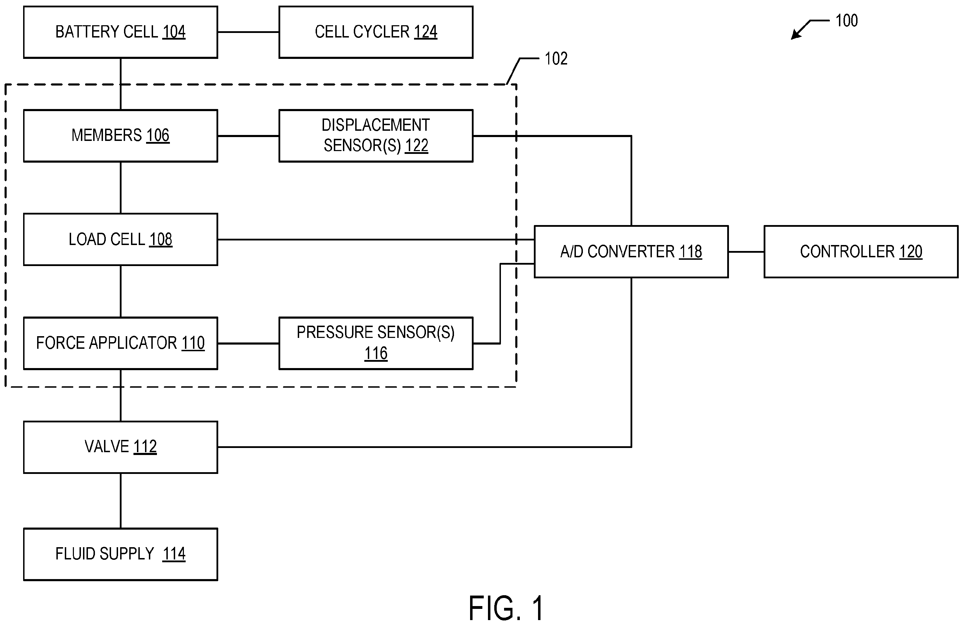

FIG. 1 shows a block diagram of an example system 100 for testing relevant responses (e.g., swelling) of a battery 104. Battery 104 may be an alkaline type battery or battery cell or any other types of battery, or battery cell, that swells. The system 100 includes a testing apparatus 102. The testing apparatus 102 includes structural members 106, hereinafter referred to as members 106, or member 106 when referring to a single member. At least one member 106 is able to translate relative to another member 106. For example, the testing apparatus 102 may be structured such that a first member 106 is fixed and a second member 106 may translate toward or away from the first member 106.

Testing apparatus 102 includes at least one force applicator 110 that is designed and arranged to effect a compressive force on battery 104 when battery 104 is disposed between members 106 of testing apparatus 102. For example, force applicator 110 may be arranged to effect a translational force on the member 106 that is able to translate relative to another member 106. In FIG. 1 the force applicator 110 is shown as a pneumatic bellows. However, it is to be understood that FIG. 1 shows the force applicator 110 as a pneumatic bellows for purposes of illustration, rather than by way of limitation, and other types of force applicators capable of applying forces in a non-linear manner in accordance with the present disclosure may be utilized. For example, the force applicator 110 may be a pneumatic piston. In any of the embodiments of the force applicator 110, the force applicator 110 may be in fluid communication with a fluid supply 114. The fluid of the fluid supply 114 may be a liquid or a gas (e.g., air). In at least some aspects, a valve 112 may be arranged between the fluid supply 114 and the force applicator 110 to control a flow of the fluid into and out of the force applicator 110. Controlling the amount of fluid within the force applicator 110 controls a pressure within the force applicator 110, which thereby controls an amount of force the force applicator 110 applies. While valve 112 and fluid supply 114 are shown separate from testing apparatus 102 in system 100, in some embodiments, one or both of valve 112 and fluid supply 114 may be components of testing apparatus 102.

In at least some embodiments, testing apparatus 102 may include a load cell 108. The load cell 108 is configured to detect a force that force applicator 110 applies to load cell 108. Load cell 108 may also be configured to generate a signal indicative of the force that force applicator 110 applies to load cell 108.

The force detected by load cell 108 can be indicative of the pressure within force applicator 110 in some instances, but the pressure within force applicator 110 is subject to external influences, such as temperature changes, and as a result the detected force is not always correlated with the pressure within force applicator 110. In various embodiments, testing apparatus 102 includes at least one pressure sensor 116. Pressure sensor(s) 116 is configured to measure the pressure within the force applicator 110, such as a pressure within the pneumatic bellows. Pressure sensor(s) 116 may also be configured to generate a signal indicative of the pressure within the force applicator 110. An aim of at least some test procedures utilizing testing apparatus 102 is to keep the compressive force applied to battery 104 constant. In furtherance of this aim, when the force detected by load cell 108 changes from a constant force, a pressure within force applicator 110 that is needed to restore the force back to the same constant force is determined, and fluid is supplied to or released from force applicator 110 until pressure sensor(s) measures the determined pressure within force applicator 110. While pressure sensor(s) 116 is shown as a component of testing apparatus 102 in system 100, in other embodiments, pressure sensor(s) 116 may be separate from testing apparatus 102.

In various embodiments, testing apparatus 102 includes at least one displacement sensor 122. Displacement sensor(s) 122 is configured to detect displacement of translatable member 106 related to a fixed member 106. Displacement sensor(s) 122 may also be configured to generate a signal indicative of the displacement of the translatable member 106 relative to a fixed member 106. The displacement is indicative of a thickness of battery 104 when battery 104 is disposed between members 106 of testing apparatus 102. The thickness of battery 104 is indicative of an amount of swelling battery 104 has demonstrated, which may be caused by the compressive force applied to the battery 104 due to translation of the translatable member 106. While displacement sensor(s) 122 is shown as a component of testing apparatus 102 in system 100, in other embodiments, displacement sensor(s) 116 may be separate from testing apparatus 102. It is noted that while testing apparatus 102 is described as including certain types of sensors, such as pressure sensors and displacement sensors, such description has been provided for purposes of illustration, rather than by way of limitation and that testing apparatus 102 may include other types of sensors depending on the particular testing to be performed or other considerations. For example, testing apparatus 102 may include temperature sensors or other types of sensors if desired.

System 100 may include a valve 112 between, and in fluid communication with, force applicator 110 and a fluid supply 114. Valve 112 can be adjusted to change an amount of fluid introduced to, or removed from, force applicator 110. For example, valve 112 may be a proportional valve or other suitable valve. Fluid supply 114 may store a liquid or a gas (e.g., air). In various embodiments, one or both of valve 112 and fluid supply 114 may be a component of testing apparatus 102.

In at least some embodiments, system 100 may include an analog-to-digital (A/D) converter 118. One or more of load cell 108, valve 112, pressure sensor(s) 116, and displacement sensor(s) 122 may be in communication with A/D converter 118. A controller 120 may also be in communication with A/D converter 118. The A/D converter 118 converts analog signals to digital signals, and vice versa, between controller 120 and load cell 108, valve 112, pressure sensor(s) 116, or displacement sensor(s) 122. Controller 120 controls a pressure within force applicator 110 according to a test procedure. The translational force that force applicator 110 applies to translatable member 106 may be based on the pressure within force applicator 110. In various embodiments, controller 120 may generate an output of the test procedure. The output may include information associated with an impact of the compressive force on battery 104. In at least some embodiments, as part of the test procedure, battery 104 may be connected to a cell cycler 124. Cell cycler 124 effects charge and discharge cycles of battery 104, which may occur before, during, and/or after the test procedure. In various aspects, controller 120 may be in communication with cell cycler 124 such that controller 120 controls the output of cell cycler 124 (e.g., when cell cycler 124 begins charge and discharge cycles).

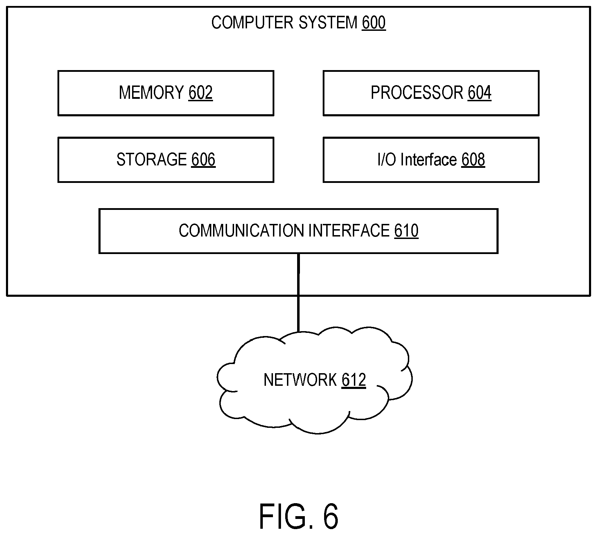

Controller 120 may be a computing device (e.g., computer system 600 of FIG. 6) including a memory in communication with a processor configured to control the pressure within force applicator 110. Controller 120 is configured to generate control signals that are configured to control or adjust the various components communicatively coupled to controller 120 as well as the various parameters (e.g., pressure, force) described herein. In some embodiments, one or both of controller 120 and A/D converter 118 may be components of testing apparatus 102. In some aspects, controller 120 may receive a first signal from load cell 108 and control the pressure within force applicator 110 based on the first signal from load cell 108. The first signal from load cell 108 is indicative of a force applied to load cell 108 by force applicator 110. In some aspects, controller 120 may receive a second signal indicative of the pressure within force applicator 110 and control the pressure within force applicator 110 based on the second signal. For example, the second signal may be received from pressure sensor(s) 116. In some aspects, controller 120 may control the pressure within force applicator 110 based on both the first signal and the second signal.

Controller 120 may control the pressure within force applicator 110 by adjusting a volume of a fluid provided to force applicator 110 by fluid supply 114. For instance, controller 120 may control valve 112 in order to control how much fluid is supplied to, or removed from, force applicator 110 to change the pressure within force applicator 110. In an aspect, system 100 may include a pump (not shown) operating under control of controller 120 to move fluid into/out of the force applicator 110. In such an aspect, the pump may be in fluid communication with fluid supply 114. Valve 112 may be positioned between the pump and force applicator 110. In an aspect, system 100 may include a compressor (not shown) operating under control of controller 120 to increase the pressure of a fluid from fluid supply 114 and supply the pressurized fluid to force applicator 110. In such an aspect, the compressor may be in fluid communication with fluid supply 114. Valve 112 may be positioned between the compressor and force applicator 110.

Controller 120 may control the pressure within force applicator 110 according to various test procedures. For example, the force that force applicator 110 applies to load cell 108 may increase as battery 104 swells or decrease as battery 104 relaxes, and when the first signal is indicative of such increase or decrease in force, controller 120 may adjust the pressure within force applicator 110 according to the test procedure. For example, the test procedure may call for a constant compressive force to be applied to battery 104, and controller 120 may control valve 112 to adjust a volume of fluid within force applicator 110 in order to increase or decrease the translational force applied to battery 104 such that the compressive force is equal to the constant force. In another example, the test procedure may call for increasing the compressive force applied to battery 104 as battery 104 swells, which can decrease the amount of irreversible swelling that occurs for battery 104. In another example, the test procedure may call for a compressive force to be applied to battery 104 according to a predefined force curve or portion of the predefined force curve, and controller 120 may control valve 112 to adjust a volume of fluid within force applicator 110 in order to increase or decrease the translational force applied to battery 104 such that the compressive force is consistent with the predefined force curve or a portion of the force curve. In such examples, the translational force effected by force applicator 110 is non-linear, which is not possible for mechanical springs.

In some aspects, controller 120 may receive a third signal indicative of a displacement of the translatable member 106 relative to the fixed member 106. For example, the third signal may be received from displacement sensor(s) 122. The displacement is indicative of a thickness of battery 104, which changes as battery 104 swells and relaxes, which may be due in part on the compressive force applied to battery 104 (as well as cell cycler 124). In various aspects, the information associated with the impact of the compressive force on battery 104 included in the output of the test procedure may include the displacement. For example, an amplitude of battery 104 swelling and relaxation may be a relevant response of battery 104 during different charge and discharge processes of the test procedure. Monitoring the amplitude of battery 104 swelling and relaxation can help a user adjust the translational force effected by force applicator 110 to mitigate the effects of irreversible swelling.

In various embodiments, one or more of the components of system 100 may be in wireless communication with another component of system 100 over a computer network. For example, one or more of load cell 108, pressure sensor(s) 116, or displacement sensor(s) 122 may be communicatively coupled to controller 120 via a wired or wireless communication link over the computer network. The computer network (e.g., a telecommunications network) may be used to implement various aspects of the present application. Generally in such embodiments, the computer network includes various devices communicating and functioning together in the gathering, transmitting, and/or requesting of data related to testing a battery cell. A communications network may allow for communication in the computer network. The communications network may include one or more wireless networks such as, but not limited to one or more of a Local Area Network (LAN), Wireless Local Area Network (WLAN), a Personal Area Network (PAN), Campus Area Network (CAN), a Metropolitan Area Network (MAN), a Wide Area Network (WAN), a Wireless Wide Area Network (WWAN), Global System for Mobile Communications (GSM), Personal Communications Service (PCS), Digital Advanced Mobile Phone Service (D-Amps), Bluetooth, Wi-Fi, Fixed Wireless Data, 2G, 2.5G, 3G, 4G, LTE networks, enhanced data rates for GSM evolution (EDGE), General packet radio service (GPRS), enhanced GPRS, messaging protocols such as, TCP/IP, SMS, MMS, extensible messaging and presence protocol (XMPP), real time messaging protocol (RTMP), instant messaging and presence protocol (IMPP), instant messaging, USSD, IRC, or any other wireless data networks or messaging protocols. The communications network may also include wired networks.

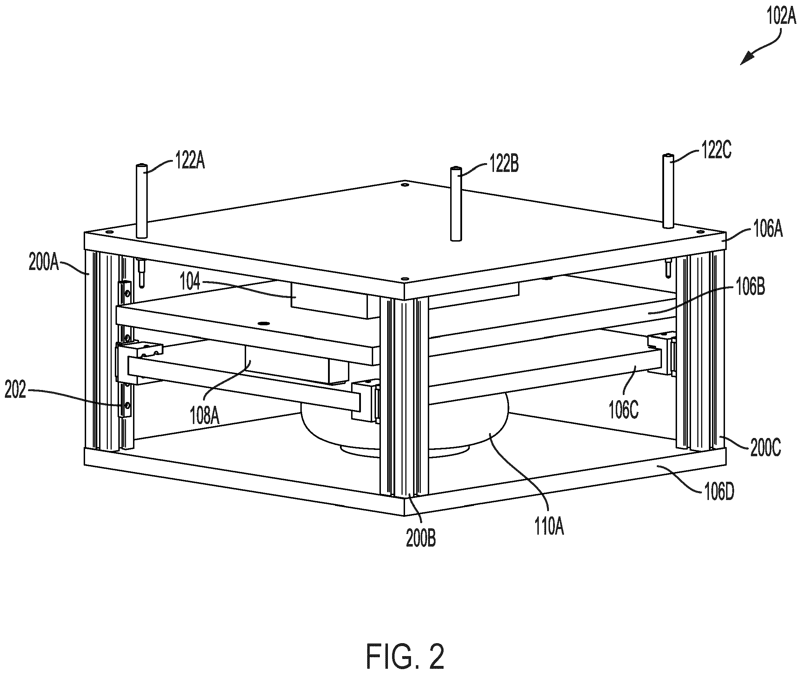

FIG. 2 illustrates an example embodiment of testing apparatus 102 (indicated as testing apparatus 102A) of system 100. Testing apparatus 102A includes members 106 indicated as member 106A, member 106B, member 106C, and member 106D. In this embodiment, members 106A and 106D are fixed whereas members 106B and 106C translate relative to members 106A and 106D. Each of members 106A, 106B, 106C, and 106D are connected to support members 200A, 200B, 200C, and 200D. Each of the support members 200A, 200B, 200C, and 200D includes a guide member 202, though guide member 202 is only visible on support member 200A. Each of the translatable members 106B and 106C may be connected to guide members 202 such that members 106B and 106C can translate along guide members 202. In this embodiment, battery 104 is disposed between member 106A and member 106B, at least one load cell 108 (indicated as load cell 108A) is disposed between member 106B and member 106C, and a force applicator 110 (indicated as force applicator 110A) is disposed between member 106C and 106D. In this embodiment, a non-illustrated second load cell 108A is disposed on the opposing side of testing apparatus 102A as the illustrated load cell 108A. Force applicator 110A is illustrated as a pneumatic bellows in this embodiment. Force applicator 110A effects a force on member 106C, which transfers to member 106B and to battery 104 such that battery 104 is compressed between member 106A and member 106B. The example testing apparatus 102A may further include displacement sensor(s) 122 indicated as displacement sensors 122A, 122B, and 122C. Each of displacement sensors 122A, 122B, and 122C measures a displacement of member 106B relative to member 106A. The use of multiple displacement sensors 122A, 122B, and 122C enables detecting whether a portion of the battery swells more than other portions.

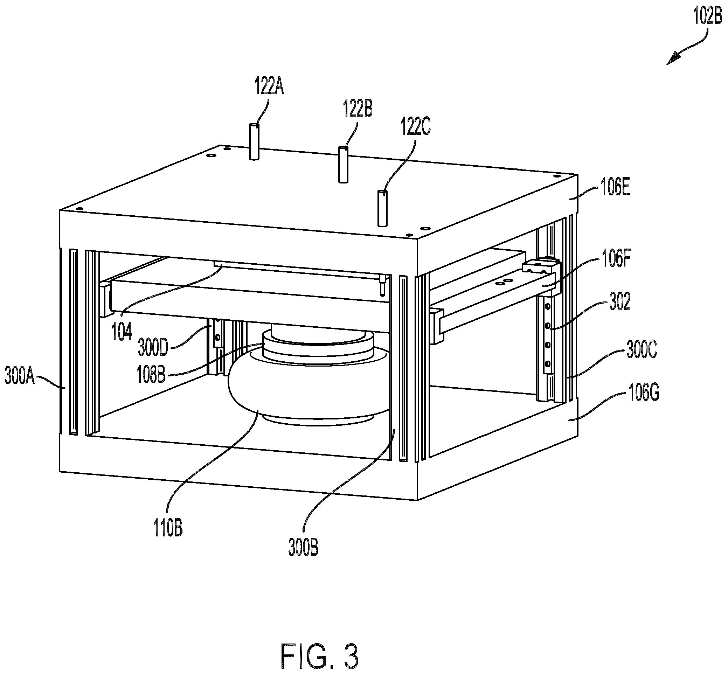

FIG. 3 illustrates another example embodiment of testing apparatus 102 (indicated as testing apparatus 102B) of system 100. In this embodiment, testing apparatus 102B includes members 106 indicated as member 106E, member 106F, and member 106G. Members 106E and 106G are fixed whereas member 106F translates relative to members 106E and 106G. Each of members 106EA, 106F, and 106G are connected to support members 300A, 300B, 300C, and 300D. Each of the support members 300A, 300B, 300C, and 300D includes a guide member 302, though guide member 302 is only visible on support member 300C. The translatable member 106F may be connected to guide members 302 such that member 106F can translate (i.e., move towards and away from member 106E) along guide members 202. In this embodiment, battery 104 is disposed between member 106E and member 106F, a load cell 108 (indicated as load cell 108B) is disposed between member 106F and a force applicator 110 (indicated as force applicator 110B), and force applicator 110B is disposed between load cell 108B and member 106G. Force applicator 110B is illustrated as a pneumatic bellows in this embodiment. Force applicator 110B effects a force on load cell 108B, which transfers to member 106F and to battery 104 such that battery 104 is compressed between member 106E and member 106F. The example testing apparatus 102B may further include displacement sensors 122A, 122B, and 122C. Each of displacement sensors 122A, 122B, and 122C measures a displacement of member 106F relative to member 106E.

It will be appreciated that testing apparatus 102A and testing apparatus 102B are only two example embodiments of testing apparatus 102 and other embodiments are contemplated according to concepts described herein. For example, testing apparatus 102A may include more than one force applicator 110A (e.g., two, three, four, etc.) that each effect a translational force on member 106C. For instance, additional force may need to be applied to battery 104 during a test procedure. In another instance, it may be beneficial in certain testing procedures to apply different forces to different areas of battery 104 (e.g., one force applicator 110A effecting a force on the cathode side of battery 104 and a second force applicator 110A effecting a force on the anode side of battery 104) to counteract different swelling in different regions and investigate the topology of swelling of battery 104. In another example, testing apparatus 102A or testing apparatus 102B may have more or less than three displacement sensors 122A, 122B, and 122C. In another example, while not shown for either testing apparatus 102A or testing apparatus 102B, either may include a pressure sensor 116. In another example, rather than force applicator 102B effecting an upward force into battery 104, force applicator 102B may be arranged to effect a downward force onto battery 104, or any other suitable orientation of force.

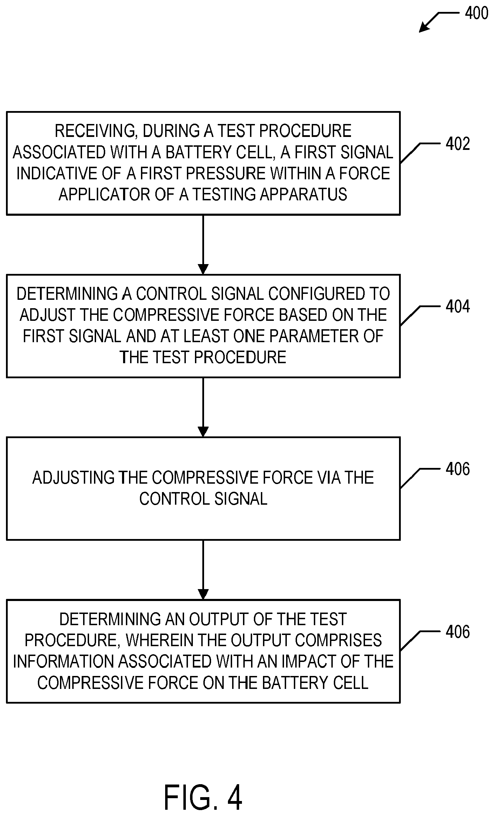

FIG. 4 shows a flow chart of an example method for testing a battery cell. Although the example method 400 is described with reference to the flowchart illustrated in FIG. 4, it will be appreciated that many other methods of performing the acts associated with the method 400 may be used. For example, the order of some of the blocks may be changed, certain blocks may be combined with other blocks, additional blocks may be added, and some of the blocks described may be omitted. The method 400 may be performed by processing logic that may comprise hardware (circuitry, dedicated logic, etc.), software, or a combination of both.

At block 402, a first signal indicative of a first pressure within a force applicator (e.g., force applicator 110) of a testing apparatus (e.g., testing apparatus 102) is received during a test procedure associated with a battery cell (e.g., battery 104). In various aspects, the first signal may be received from one or more pressure sensors (pressure sensor(s) 116) of testing apparatus 102. The force applicator 110 is configured to effect a compressive force on the battery 104 based on the first pressure. For example, battery 104 may be disposed between a translatable member 106 and a fixed member 106 and force applicator 110 may effect a translational force on the translatable member 106, which effects a compressive force on battery 104 between the translatable member 106 and the fixed member 106.

At block 404, a control signal is determined that is configured to adjust the compressive force based on the first signal and at least one parameter of the test procedure. For example, the control signal may cause an adjustment to the first pressure within force applicator 110, which in turn causes an adjustment to the compressive force on battery 104. In one example, the at least one parameter may be a value of a pressure within force applicator 110 that is to be maintained through the test procedure. Applying a constant magnitude of force to battery 104 throughout the test procedure can be beneficial for testing various aspects of battery 104. Stated differently, when the compressive force applied to battery 104 is constant, other variables can be better measured, which results in a better simulation of battery 104 responses.

In another example, the at least one parameter may be a non-linear representation of force (e.g., a force curve, such as a parabolic force curve) that is to be applied during the test procedure. The non-linear representation of force may be associated with a known or unknown material. For instance, the non-linear representation of force may be a known force curve response of a material (e.g., sheet, foam, etc.) that surrounds battery 104 in use outside of the testing procedure. Stated differently, the test procedure may involve simulating a response of a material without having the material itself, regardless of whether the material's response is linear or non-linear. In another instance, the non-linear representation of force may be a desired force curve response of an unknown material. In such instances, if the output of the test procedure indicates a positive battery 104 response, then a material can be determined or created that demonstrates the desired force curve response. In various aspects, the non-linear representation of force is received (e.g., as control information by controller 120) prior to initiation of the test procedure (e.g., prior to block 402). In this way, controller 120 can control the pressure within force applicator 110 during the test procedure according to the received control information that includes the non-linear representation of force.

At block 406, the compressive force applied to battery 104 is adjusted via the determined control signal. For example, controller 120 may transmit the control signal to valve 112, which in effect adjusts the pressure within force applicator 110.

At block 408, an output of the test procedure is determined. The output includes information associated with an impact of the compressive force on battery 104. For example, method 400 may further include receiving a second signal indicative of a thickness of battery 104. In such an example, the information associated with the impact may be indicative of the thickness of battery 104 over time. Additionally or alternatively, the information associated with the impact may be indicative of an amount of swelling of battery 104, which is a difference between a thickness of battery 104 at a point in time of the test procedure and an original thickness of battery 104 prior to the test procedure. The amount of swelling can be an amount of reversible swelling and/or an amount of irreversible swelling. Additionally or alternatively, the information associated with the impact may be other suitable information relevant to testing a response of battery 104 to charge and discharge cycles. For example, the information associated with the impact may, additionally or alternatively, be indicative of the compressive force applied during the test procedure. In another example, the information associated with the impact may, additionally or alternatively, be indicative of a state of health of battery 104 over the course of the test procedure in response to the compressive force applied.

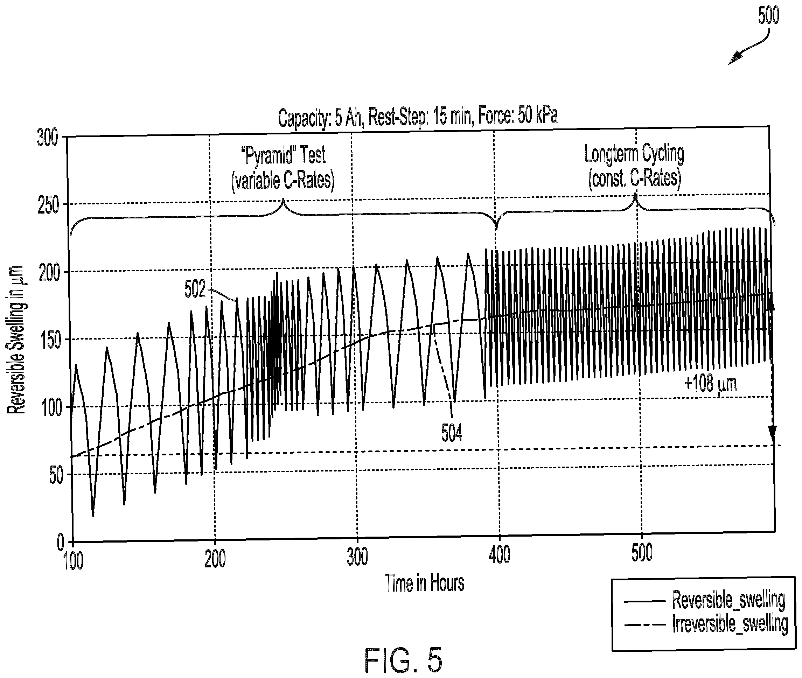

FIG. 5 is an example representation of an output 500 of the test procedure. In this example, the test procedure includes battery 104 with a capacity of 5 Ah, a rest-step of 15 minutes, and a force applied to battery 104 of 50 kPa. During the rest-step, battery 104 is not charged or discharged, which allows for a relaxation of the voltage of battery 104. The example representation of output 500 shows a line 502 indicative of an amplitude of reversible swelling of battery 104 over time, which is based on thickness measurements of battery 104. A line 504 indicative of an amount of irreversible swelling is also shown over time. At the end of the test procedure, it is shown that 108 µm of irreversible swelling occurred. A first time period shows the reversible and irreversible swelling during a "Pyramid" test with variable C-rates. A second time period shows the reversible and irreversible swelling during longer cycling with constant C-rates. A C-rate, as is known to a person of ordinary skill in the art, is a measure of the rate at which a battery is charged or discharged relative to the battery's capacity.

FIG. 6 illustrates an example computer system 600 that may be utilized to implement one or more of the devices and/or components of the disclosed system. For example, computer system 600 may implement controller 120. In particular embodiments, one or more computer systems 600 perform one or more steps of one or more methods described or illustrated herein. In particular embodiments, one or more computer systems 600 provide the functionalities described or illustrated herein. In particular embodiments, software running on one or more computer systems 600 performs one or more steps of one or more methods described or illustrated herein or provides the functionalities described or illustrated herein (e.g., the functionalities of controller 120). Particular embodiments include one or more portions of one or more computer systems 600. Herein, a reference to a computer system may encompass a computing device, and vice versa, where appropriate. Moreover, a reference to a computer system may encompass one or more computer systems, where appropriate.

This disclosure contemplates any suitable number of computer systems 600. This disclosure contemplates the computer system 600 taking any suitable physical form. As example and not by way of limitation, the computer system 600 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, an augmented/virtual reality device, or a combination of two or more of these. Where appropriate, the computer system 600 may include one or more computer systems 600; be unitary or distributed; span multiple locations; span multiple machines; span multiple data centers; or reside in a cloud, which may include one or more cloud components in one or more networks. Where appropriate, one or more computer systems 600 may perform without substantial spatial or temporal limitation one or more steps of one or more methods described or illustrated herein. As an example and not by way of limitation, one or more computer systems 600 may perform in real time or in batch mode one or more steps of one or more methods described or illustrated herein. One or more computer systems 600 may perform at different times or at different locations one or more steps of one or more methods described or illustrated herein, where appropriate.

In particular embodiments, computer system 600 includes a processor 604, memory 602, storage 606, an input/output (I/O) interface 608, and a communication interface 610. Although this disclosure describes and illustrates a particular computer system having a particular number of particular components in a particular arrangement, this disclosure contemplates any suitable computer system having any suitable number of any suitable components in any suitable arrangement.

In particular embodiments, the processor 604 includes hardware for executing instructions, such as those making up a computer program. As an example and not by way of limitation, to execute instructions, the processor 604 may retrieve (or fetch) the instructions from an internal register, an internal cache, memory 602, or storage 606; decode and execute the instructions; and then write one or more results to an internal register, internal cache, memory 602, or storage 606. In particular embodiments, the processor 604 may include one or more internal caches for data, instructions, or addresses. This disclosure contemplates the processor 604 including any suitable number of any suitable internal caches, where appropriate. As an example and not by way of limitation, the processor 604 may include one or more instruction caches, one or more data caches, and one or more translation lookaside buffers (TLBs). Instructions in the instruction caches may be copies of instructions in memory 602 or storage 606, and the instruction caches may speed up retrieval of those instructions by the processor 604. Data in the data caches may be copies of data in memory 602 or storage 606 that are to be operated on by computer instructions; the results of previous instructions executed by the processor 604 that are accessible to subsequent instructions or for writing to memory 602 or storage 606; or any other suitable data. The data caches may speed up read or write operations by the processor 604. The TLBs may speed up virtual-address translation for the processor 604. In particular embodiments, processor 604 may include one or more internal registers for data, instructions, or addresses. This disclosure contemplates the processor 604 including any suitable number of any suitable internal registers, where appropriate. Where appropriate, the processor 604 may include one or more arithmetic logic units (ALUs), be a multi-core processor, or include one or more processors 604. Although this disclosure describes and illustrates a particular processor, this disclosure contemplates any suitable processor.

In particular embodiments, the memory 602 includes main memory for storing instructions for the processor 604 to execute or data for processor 604 to operate on. As an example, and not by way of limitation, computer system 600 may load instructions from storage 606 or another source (such as another computer system 600) to the memory 602. The processor 604 may then load the instructions from the memory 602 to an internal register or internal cache. To execute the instructions, the processor 604 may retrieve the instructions from the internal register or internal cache and decode them. During or after execution of the instructions, the processor 604 may write one or more results (which may be intermediate or final results) to the internal register or internal cache. The processor 604 may then write one or more of those results to the memory 602. In particular embodiments, the processor 604 executes only instructions in one or more internal registers or internal caches or in memory 602 (as opposed to storage 606 or elsewhere) and operates only on data in one or more internal registers or internal caches or in memory 602 (as opposed to storage 606 or elsewhere). One or more memory buses (which may each include an address bus and a data bus) may couple the processor 604 to the memory 602. The bus may include one or more memory buses, as described in further detail below. In particular embodiments, one or more memory management units (MMUs) reside between the processor 604 and memory 602 and facilitate accesses to the memory 602 requested by the processor 604. In particular embodiments, the memory 602 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. The memory 602 may include one or more memories 602, where appropriate. Although this disclosure describes and illustrates particular memory implementations, this disclosure contemplates any suitable memory implementation.

In particular embodiments, the storage 606 includes mass storage for data or instructions. As an example and not by way of limitation, the storage 606 may include a hard disk drive (HDD), a floppy disk drive, flash memory, an optical disc, a magneto-optical disc, magnetic tape, or a Universal Serial Bus (USB) drive or a combination of two or more of these. The storage 606 may include removable or non-removable (or fixed) media, where appropriate. The storage 606 may be internal or external to computer system 600, where appropriate. In particular embodiments, the storage 606 is non-volatile, solid-state memory. In particular embodiments, the storage 606 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 606 taking any suitable physical form. The storage 606 may include one or more storage control units facilitating communication between processor 604 and storage 606, where appropriate. Where appropriate, the storage 606 may include one or more storages 606. Although this disclosure describes and illustrates particular storage, this disclosure contemplates any suitable storage.

In particular embodiments, the I/O Interface 608 includes hardware, software, or both, providing one or more interfaces for communication between computer system 600 and one or more I/O devices. The computer system 600 may include one or more of these I/O devices, where appropriate. One or more of these I/O devices may enable communication between a person and computer system 600. As an example and not by way of limitation, an I/O device may include a keyboard, keypad, microphone, monitor, screen, display panel, mouse, printer, scanner, speaker, still camera, stylus, tablet, touch screen, trackball, video camera, another suitable I/O device or a combination of two or more of these. An I/O device may include one or more sensors. Where appropriate, the I/O Interface 608 may include one or more device or software drivers enabling processor 604 to drive one or more of these I/O devices. The I/O interface 608 may include one or more I/O interfaces 608, where appropriate. Although this disclosure describes and illustrates a particular I/O interface, this disclosure contemplates any suitable I/O interface or combination of I/O interfaces.

In particular embodiments, communication interface 610 includes hardware, software, or both providing one or more interfaces for communication (such as, for example, packet-based communication) between computer system 600 and one or more other computer systems 600 or one or more networks 612. As an example and not by way of limitation, communication interface 610 may include a network interface controller (NIC) or network adapter for communicating with an Ethernet or any other wire-based network or a wireless NIC (WNIC) or wireless adapter for communicating with a wireless network, such as a Wi-Fi network. This disclosure contemplates any suitable network 612 and any suitable communication interface 610 for it. As an example and not by way of limitation, the network 612 may include one or more of an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 600 may communicate with a wireless PAN (WPAN) (such as, for example, a Bluetooth^{®} WPAN), a WI-FI network, a WI-MAX network, a cellular telephone network (such as, for example, a Global System for Mobile Communications (GSM) network), or any other suitable wireless network or a combination of two or more of these. Computer system 600 may include any suitable communication interface 610 for any of these networks, where appropriate. Communication interface 610 may include one or more communication interfaces 610, where appropriate. Although this disclosure describes and illustrates a particular communication interface implementations, this disclosure contemplates any suitable communication interface implementation.

The computer system 600 may also include a bus. The bus may include hardware, software, or both and may communicatively couple the components of the computer system 600 to each other. As an example and not by way of limitation, the bus may include an Accelerated Graphics Port (AGP) or any other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. The bus may include one or more buses, where appropriate. Although this disclosure describes and illustrates a particular bus, this disclosure contemplates any suitable bus or interconnect.

Herein, a computer-readable non-transitory storage medium or media may include one or more semiconductor-based or other types of integrated circuits (ICs) (e.g., field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Components, the functional blocks, and the modules described herein with respect to FIGs. 1-4 include processors, electronics devices, hardware devices, electronics components, logical circuits, memories, software codes, firmware codes, among other examples, or any combination thereof. Software shall be construed broadly to mean instructions, instruction sets, code, code segments, program code, programs, subprograms, software modules, application, software applications, software packages, routines, subroutines, objects, executables, threads of execution, procedures, and/or functions, among other examples, whether referred to as software, firmware, middleware, microcode, hardware description language or otherwise. In addition, features discussed herein may be implemented via specialized processor circuitry, via executable instructions, or combinations thereof.

Those of skill would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure. Skilled artisans will also readily recognize that the order or combination of components, methods, or interactions that are described herein are merely examples and that the components, methods, or interactions of the various aspects of the present disclosure may be combined or performed in ways other than those illustrated and described herein.

The various illustrative logics, logical blocks, modules, circuits and algorithm processes described in connection with the implementations disclosed herein may be implemented as electronic hardware, computer software, or combinations of both. The interchangeability of hardware and software has been described generally, in terms of functionality, and illustrated in the various illustrative components, blocks, modules, circuits and processes described above. Whether such functionality is implemented in hardware or software depends upon the particular application and design constraints imposed on the overall system.

The hardware and data processing apparatus used to implement the various illustrative logics, logical blocks, modules and circuits described in connection with the aspects disclosed herein may be implemented or performed with a general purpose single- or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, or, any conventional processor, controller, microcontroller, or state machine. In some implementations, a processor may be implemented as a combination of computing devices, such as a combination of a DSP and a microprocessor, a plurality of microprocessors, one or more microprocessors in conjunction with a DSP core, or any other such configuration. In some implementations, particular processes and methods may be performed by circuitry that is specific to a given function.

In one or more aspects, the functions described may be implemented in hardware, digital electronic circuitry, computer software, firmware, including the structures disclosed in this specification and their structural equivalents thereof, or in any combination thereof. Implementations of the subject matter described in this specification also may be implemented as one or more computer programs, that is one or more modules of computer program instructions, encoded on a computer storage media for execution by, or to control the operation of, data processing apparatus.

If implemented in software, the functions may be stored on or transmitted over as one or more instructions or code on a computer-readable medium. The processes of a method or algorithm disclosed herein may be implemented in a processor-executable software module which may reside on a computer-readable medium. Computer-readable media includes both computer storage media and communication media including any medium that may be enabled to transfer a computer program from one place to another. A storage media may be any available media that may be accessed by a computer. By way of example, and not limitation, such computer-readable media may include random-access memory (RAM), read-only memory (ROM), electrically erasable programmable read-only memory (EEPROM), CD-ROM or other optical disk storage, magnetic disk storage or other magnetic storage devices, or any other medium that may be used to store desired program code in the form of instructions or data structures and that may be accessed by a computer. Also, any connection may be properly termed a computer-readable medium. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and instructions on a machine readable medium and computer-readable medium, which may be incorporated into a computer program product.

Various modifications to the implementations described in this disclosure may be readily apparent to those skilled in the art, and the generic principles defined herein may be applied to some other implementations without departing from the spirit or scope of this disclosure. Thus, the claims are not intended to be limited to the implementations shown herein, but are to be accorded the widest scope consistent with this disclosure, the principles and the novel features disclosed herein.

Certain features that are described in this specification in the context of separate implementations also may be implemented in combination in a single implementation. Conversely, various features that are described in the context of a single implementation also may be implemented in multiple implementations separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Further, the drawings may schematically depict one more example processes in the form of a flow diagram. However, other operations that are not depicted may be incorporated in the example processes that are schematically illustrated. For example, one or more additional operations may be performed before, after, simultaneously, or between any of the illustrated operations. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products. Additionally, some other implementations are within the scope of the following claims. In some cases, the actions recited in the claims may be performed in a different order and still achieve desirable results.

It is noted that one or more blocks (or operations) described with reference to FIGs. 1, 4, or 6 may be combined with one or more blocks (or operations) described with reference to another of the figures. For example, one or more blocks (or operations) of FIG. 6 may be combined with one or more blocks (or operations) of FIG. 1. As another example, one or more blocks associated with FIG. 4 may be combined with one or more blocks associated with FIG. 1.

Lines connecting components in system figures included herewith (e.g., FIG. 1) indicate that the connected components are in communication with one another (e.g., fluid communication, wireless communication, wired communication, etc.). The components of system 100 may be combined, rearranged, removed, or provided on a separate device or server.

All numerical ranges herein should be understood to include all integers, whole or fractions, within the range, inclusive of the ends of the ranges. Moreover, these numerical ranges should be construed as providing support for a claim directed to any number or subset of numbers in that range. For example, a disclosure of from 1 to 10 should be construed as supporting a range of from 1 to 8, from 3 to 7, from 1 to 9, from 3.6 to 4.6, from 3.5 to 9.9, and so forth.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

The above specification provide a complete description of the structure and use of illustrative embodiments of this invention. Although certain embodiments have been described above with a certain degree of particularity, or with reference to one or more individual embodiments, those of ordinary skill in the art could make numerous alterations to the disclosed embodiments without departing from the scope of this invention. As such, the various illustrative embodiments of the present apparatuses and methods are not intended to be limited to the particular forms disclosed. Rather, they include all modifications and alternatives falling within the scope of the claims, and embodiments other than those shown may include some or all of the features of the depicted embodiment. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

## Claims

1. An apparatus for testing a battery comprising:
a first member;
a second member configured to translate relative to the first member;
a force applicator configured to effect a translational force on the second member such that, when a battery is disposed between the first member and the second member, a compressive force is applied to the battery; and
a controller configured to:
control a pressure within the force applicator according to a test procedure, wherein the translational force applied to the second member is based on the pressure within the force applicator; and
generate an output of the test procedure, wherein the output comprises information associated with an impact of the compressive force on the battery.

2. The apparatus of claim 1, further comprising:
a load cell configured to generate a first signal indicative of a force effected on the load cell by the second member;
wherein the controller is configured to:
receive the first signal from the load cell; and
control the pressure within the force applicator based on the first signal.

3. The apparatus of claim 1 or 2, further comprising a displacement sensor configured to generate a third signal indicative of a displacement of the second member relative to the first member, wherein the controller is configured to receive the third signal, and wherein the information associated with the impact comprises the displacement of the second member relative to the first member based on the third signal.

4. The apparatus of any one of the preceding claims, wherein the force effected by the force applicator is non-linear.

5. The apparatus of any one of the preceding claims, wherein the controller is configured to:
receive control information prior to the test procedure; and
control the pressure within the force applicator during the test procedure according to the received force information.

6. A system for testing a battery comprising:
a testing apparatus comprising:
a first member;
a second member configured to translate relative to the first member;
a force applicator configured to effect a translational force on the second member such that, when a battery is disposed between the first member and the second member, a compressive force is applied to the battery; and
a controller configured to:
generate control signals configured to control an amount of translational force effected on the second member by the force applicator according to a test procedure; and
generate an output of the test procedure, wherein the output comprises information associated with an impact of the compressive force on the battery.

7. The system of claim 6, wherein the force applicator is a pneumatic bellows or a pneumatic piston.

8. The system of claim 6 or 7, further comprising:
the battery; and
a cell cycler connected to the battery, wherein the cell cycler is configured to charge and discharge the battery.

9. The system of any one of claims 6 to 8, wherein the testing apparatus further comprises a load cell configured to generate a first signal indicative of a force effected on the load cell by the second member, wherein the controller is configured to:
receive the first signal from the load cell; and
control the pressure within the force applicator based on the first signal.

10. The system of any one of claims 6 to 9, further comprising a pressure sensor configured to generate a second signal indicative of a pressure within the force applicator, wherein the translational force effected on the second member by the force applicator is based on the pressure, and wherein the controller is configured to:
receive the second signal; and
control the pressure within the force applicator by adjusting a volume of a fluid provided by a fluid supply based on the second signal.

11. The system of any one of claims 6 to 10, wherein the force effected by the force applicator is non-linear.

12. The system of any one of claims 6 to 11, wherein the controller is configured to:
receive control information prior to the test procedure; and
control the pressure within the force applicator during the test procedure according to the received control information.

13. A method for testing a battery comprising:
receiving, during a test procedure associated with a battery, a first signal indicative of a first pressure within a force applicator of a testing apparatus, wherein the force applicator is configured to effect a compressive force on the battery based on the first pressure;
determining a control signal configured to adjust the compressive force based on the first signal and at least one parameter of the test procedure;
adjusting the compressive force via the control signal; and
determining an output of the test procedure, wherein the output comprises information associated with an impact of the compressive force on the battery.

14. The method of claim 13, wherein the at least one parameter is a non-linear representation of force associated with a material, the method further comprising receiving the non-linear representation of force associated with the material prior to initiation of the test procedure.

15. The method of claim 13 or 14, further comprising receiving a second signal indicative of a thickness of the battery, wherein the information associated with the impact includes the thickness of the battery.
